# EUROPÄISCHE PATENTSCHRIFT

(11) **EP 1 506 703 B1**
(45) Veröffentlichungstag und Bekanntmachung des Hinweises auf die Patenterteilung: **26.09.2012**
(21) Anmeldenummer: 04013583.2
(22) Anmeldetag: 09.06.2004
(51) Int. Cl.: A01B 21/08, A01B 63/24

(54) **Scheibengerät**
disk apparatus
outil à disques

(30) Priorität: 09.08.2003 DE 10336652
(43) Veröffentlichungstag der Anmeldung: 16.02.2005
(73) Patentinhaber: Amazonen-Werke H. Dreyer GmbH & Co. KG, 49205 Hasbergen (DE)
(72) Erfinder: Dreyer, Heinz, Dr. Prof. (SA Samara), 49205 Hasbergen (DE); Scheufler, Bernd, Dr. Ing., 49205 Hasbergen (DE); Pokriefke, Michael, Dipl.-Ing., 04229 Leipzig (DE); Sosnicki, Jürgen, Dipl.-Ing., 04205 Leipzig (DE)

(56) Entgegenhaltungen:
- WO-A-2004/004437
- WO-A-2004/004438
- DE-A1- 19 544 199
- DE-T1- 10 084 623
- GB-A- 919 316
- GB-A- 2 267 019
- US-A- 4 928 774

## Beschreibung

Die Erfindung betrifft ein Scheibengerät gemäß des Oberbegriffes des Patentanspruches 1.

Ein derartiges Scheibengerät ist beispielsweise in der DE 10 084 623 beschrieben. Bei diesem Scheibengerät kann der erste Träger zu dem zweiten Träger mit den daran angeordneten Scheiben mittels einer als Schraubspindel oder einem Hydraulikzylinder ausgebildeten Verschiebungs - und Verriegelungselement zueinander verschoben werden, so dass die gewünschte Ausrichtung der Scheiben der ersten Reihe zu den Scheiben der zweiten Reihe eingestellt werden kann.

In manchen Fällen ist diese Einstellung relativ aufwendig und nicht robust genug ausgeführt. Der Erfindung liegt die Aufgabe zugrunde, die verstellbare Anordnung der Träger quer zur Fahrtrichtung wesentlich zu vereinfachen und robuster zu gestalten.

Diese Aufgabe wird durch die kennzeichnenden Merkmale des Anspruches 1 gelöst. Mittels dieser eine mit zumindest einem Absteckbolzen zusammenwirkende Lochreihe aufweisenden Festlegungseinrichtung lässt sich in einfacher Weise der verstellbare Träger mit daran befindlichen Teilen nach dem Verschieben festlegen. Eine derartige Festlegungseinrichtung ist sehr preiswert herzustellen. Außerdem weist sei eine große Robustheit auf. Eine derartige Verstellung hat sich in der Landtechnik beispielsweise bei der Höheneinstellung von Bodenbearbeitungsgeräten in vielfacher Weise bewährt.

Sehr preiswert ist das Festlegungselement auszugestalten, wenn es nicht zur Verschiebung der Träger geeignet ist. Es ist dann lediglich zur Festlegung der Lage der Träger zum Rahmen ausgelegt.

Eine einfache Ausbildung des Festlegungselementes lässt sich dadurch erreichen, dass den Trägern zur Festlegung der Träger zumindest eine mit zumindest einem Absteckbolzen zusammenwirkende Lochreihe zugeordnet ist.

Eine einfache verschiebbare Anordnung der Träger lässt sich dadurch erreichen, dass zumindest einer der Träger in einer Schiebeführung am Rahmen angeordnet ist.

In den Fällen, in denen es gewünscht ist, dass beide Träger verschiebbar sind, kann vorgesehen sein, dass beide Träger in einer Schiebeführung angeordnet sind.

Um dann jeden Träger festlegen zu können, ist vorgesehen, dass jedem Träger ein Festlegungselement zugeordnet ist.

Eine weitere verschiebbare Anordnung lässt sich dadurch erreichen, dass zumindest einer der beiden Träger an um aufrechte Achsen schwenkbaren Haltungen angeordnet und dass zumindest einer der Halterungen das Festlegungselement zugeordnet ist.

In einer weiteren Ausführung ist vorgesehen, dass zumindest einer der Träger an um aufrechte Achsen schwenkbaren Halterungen angeordnet ist, und dass der Halterung das Festlegungselement zugeordnet ist.

Eine weitere Ausführungsgestaltung der Erfindung ergibt sich dadurch, dass zumindest einer der beiden Träger um in Fahrtrichtung weisende Achsen schwenkbaren Halterungen angeordnet sind, und dass der verschiebbar angeordnete Träger mittels des Festlegungselementes in seiner Position festsetzbar ist.

Weiterhin ist vorgesehen, dass zumindest einer der Träger in Schiebeführung quer zur Fahrtrichtung verschiebbar angeordnet ist und dass dem verschiebbaren Träger ein die Arbeitsstellung bestimmendes Anschlagelementes zugeordnet ist. Infolge dieser Maßnahmen kommt der Träger an dem die Arbeitsstellung bestimmenden Anschlag zur Anlage, so dass sich automatisch, wenn das Anschlagselement in die vorgesehene Position gebracht ist, die an dem Träger angeordneten Scheiben sich in der richtigen Arbeitsposition befinden.

In einer Ausgestaltung der Erfindung ist vorgesehen, dass der hintere Träger unverschiebbar am Tragrahmen angeordnet ist, und dass der vordere Träger quer zur Fahrtrichtung 30 verschiebbar mittels entsprechender Haltevorrichtungen am Rahmen befestigt ist.

Hierdurch kann insbesondere der Tatsache der Rechnung getragen werden, dass insbesondere die Scheiben der vorderen Querreihe den Boden aufbrechen müssen und einen größeren Widerstand zu überwinden haben, somit können also die Ausweichbewegungen der vorderen Scheiben egalisiert werden.

Um die Scheiben zu der hinteren Querreihe einstellen zu können, ist vorgesehen, dass der hintere Träger unverschiebbar am Tragrahmen angeordnet ist und dass der vordere Träger quer zur Fahrtrichtung verschiebbar mittels entsprechender Haltevorrichtungen am Rahmen befestigt ist.

Die die Arbeitsstellung der Träger und der der angeordneten Scheiben bestimmenden Anschläge bzw. Festlegungselemente sind derart angeordnet, dass die die Arbeitsstellung bestimmenden Anschläge zur Begrenzung der seitlichen Verschiebbarkeit der Träger so angeordnet sind, dass der Träger bei Vorwärts fahrt des Gerätes an den Anschlägen anliegen und bei Rückwärtsfahrt des Gerätes sich der Träger von den Anschlägen abheben. Infolge dieser Maßnahme wird in einfachster Weise eine Festlegung des Trägers mit dem Scheibenelementen in Arbeitsstellung bzw. Transportstellung erreicht bzw. eine Umstellung von Transportstellung in Arbeitsstellung und umgekehrt in einfacher Weise ohne Kraftanstrengung durch die Bedienungsperson durch einfaches Vorwärts- und Rückwärtsfahren des Gerätes durch den Schlepper ermöglicht.

Weitere Einzelheiten der Erfindung sind den übrigen Unteransprüchen, der Beispielsbeschreibung und den Zeichnungen zu entnehmen. Hierbei zeigen
- Fig. 1: das Scheibengerät in per spektivischer Darstellung,
- Fig. 2: das Scheibengerät in der Draufsicht,
- Fig. 3: das rechte Verriegelungselement in perspektivischer Darstellung und vergrößerter Darstellung,
- Fig. 4: das linke Verriegelungselement in der Draufsicht und vergrößertem Maßstab,
- Fig. 5: ein weiteres Scheibengerät in perspektivischer Darstellung,
- Fig. 6: das Scheibengerät gemäß Fig. 5 in der Vorderansicht,
- Fig. 7: das Scheibengerät gemäß Fig. 5 in der Daraufsicht,
- Fig. 8: das Scheibengerät gemäß Fig. 5 in der Ansicht von hinten,
- Fig. 9: das Scheibengerät in der Ansicht IX - IX,
- Fig. 10: das Scheibengerät gemäß Fig. 5 in Seitenansicht,
- Fig. 11: das Scheibengerät in der Ansicht XI - XI,
- Fig. 12: das Verriegelungselement für den hinteren Querbalken in der Ansicht von hinten und im vergrößertem Maßstab,
- Fig. 13: das Verriegelungselement für den vorderen Balken in der Vorderansicht und vergrößertem Maßstab,
- Fig. 14: eine weitere Verriegelungseinheit,
- Fig. 15: eine weitere Verriegelungseinheit,
- Fig. 16: ein weiteres Scheibengerät in der Ansicht von vorne und

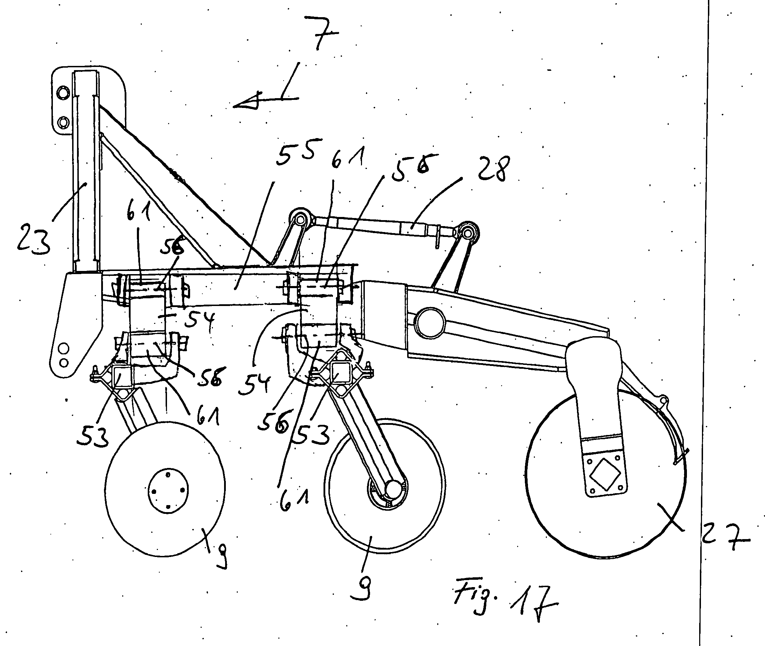

- Fig. 17: das Scheibengerät gemäß Fig. 16 in der Seitenansicht.

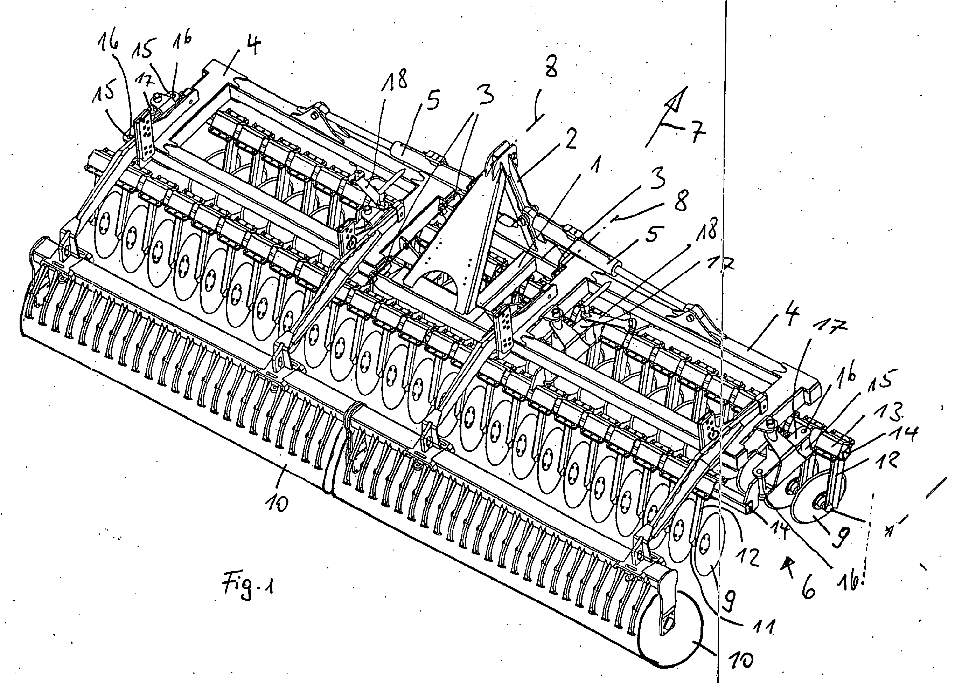

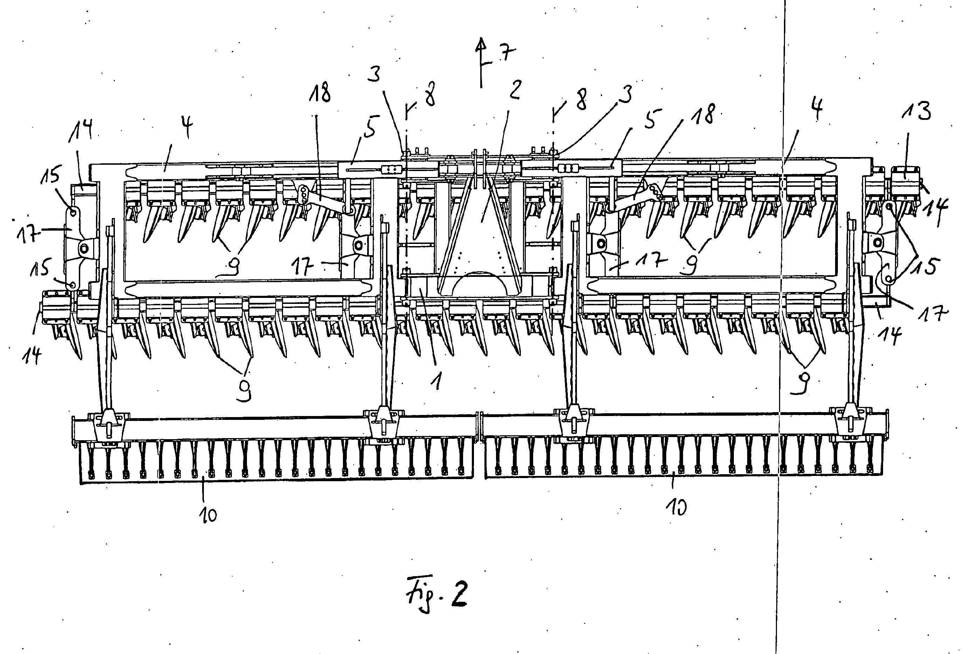

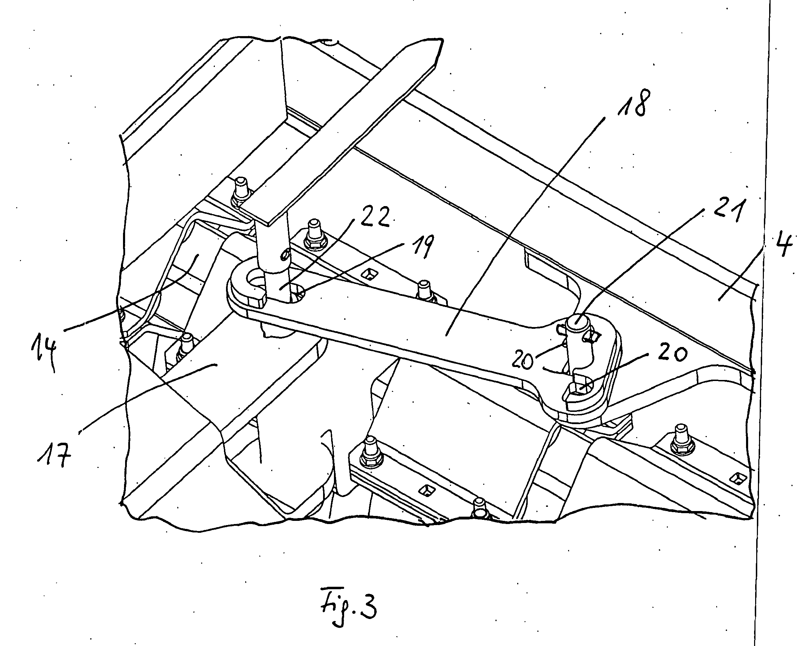

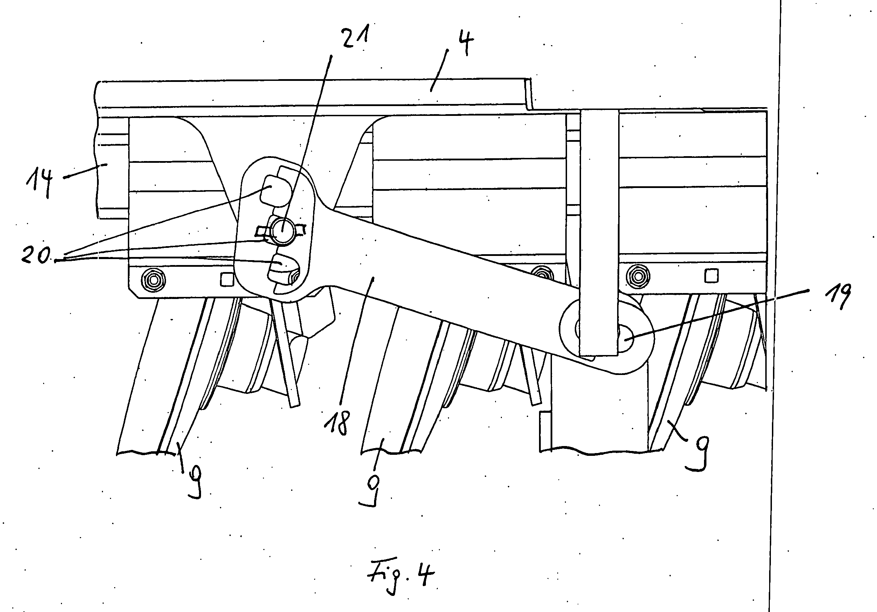

Das Scheibengerät gemäß den Fig. 1 bis 4 weist den mittleren Kuppelrahmen 1 mit dem Dreipunktanbaubock 2 auf. An diesem Mittelrahmen 1 sind mittels Gelenke 3 die Seitenrahmen 4 angeordnet. Zwischen dem Mittelrahmen 1 und dem jeweiligen Seitenrahmen 4 ist ein Hydraulikzylinder 5 angeordnet, um die Seitenrahmen 4 mit den daran befestigten Bodenbearbeitungseinheiten 6 um die in Fahrtrichtung 7 und durch die Gelenke 3 verlaufenden Schwenkachse 8 aus der dargestellten Arbeitsposition in eine Transportposition um 90° nach oben zu verschwenken.

Die an den Seitenrahmen 4 befestigten Bodenbearbeitungseinheiten 6 bestehen aus den schräg zur Fahrtrichtung 7 und zur Horizontalen angeordneten Scheiben 9 und den dahinter angeordneten Nachlaufwalzen 10. Die Scheiben 9 sind auf einer Welle 11 drehbar gelagert. Die Welle 11 ist an einem Haltearm 12 befestigt, der mittels einer Gelenkanordnung 13 bewegbar auf einem quer zur Fahrtrichtung 7 verlaufenden Träger 14 angeordnet ist. Der Träger 14 ist mittels einer Gelenkanordnung 15, die aufrechte Schwenkachsen 16 aufweist, an zwei beabstandet zueinander schwenkbar angeordneten Halterungen 17 angeordnet. Durch diese Anordnung können die Träger 14 mit den daran befestigten Scheiben 9 quer zur Fahrtrichtung 7 gegeneinander verschoben werden. Jeder Träger 14 ist mit einer Vielzahl von Haltearmen 12 versehen. An diesen Armen 12 sind die Scheiben 9, wie vor beschrieben schräg angestellt und frei drehbar angeordnet. Die Gelenkanordnung 13 weist eine elastische Lagerung auf, so dass jeder Arm 12 elastisch an dem zugeordneten Träger 14 aufgehängt ist. Die Scheiben 9 an dem ersten und zweiten Träger sind so angeordnet, dass die Scheiben 9 angestellt an dem ersten Träger entgegengesetzt schräg zu den an dem zweiten Träger angeordneten Scheiben sind.

Zwischen den Rahmen bzw. den zu dem Rahmen zugehörigen Seitenrahmen 4 und einem der Träger 14 ist ein Element 18 für den ersten und zweiten Träger 14 vorgesehen, um die parallelen Träger in wenigstens eine vorher bestimmte Arbeitsposition zueinander und zum Rahmen 4 des Scheibengerätes festzulegen. Dieses Festlegungselement 18 weist mehrere nebeneinander angeordnete und einen unterschiedlichen radialen Abstand zu dem auf der anderen Seite des Festlegungselementes 18 sich befindliche Bohrung 19 aufweisende Durchbrüche 20, vorzugsweise Langlöcher auf, die mit dem am Rahmen 4 angeordneten Bolzen 21 in Wirkverbindung stehen. Die als Langloch ausgebildete Bohrung 19 wirkt mit dem an der Halterung 17 angeordneten Bolzen 22 zusammen.

Die Einstellung der beiden Träger 14 bzw. den an den beiden Trägern 14 angeordneten Scheiben 9 zueinander erfolgt in folgender Weise:
Zunächst wird das Bodenbearbeitungsgerät in die in Fig. 1 dargestellte Arbeitsposition gebracht und auf dem Boden abgesenkt. Dann werden durch Vor- oder Rückwärtsfahren die beiden Träger 14 zueinander soweit verschoben, dass die Bolzen 21 und 22 in den Langlöchern 19 und 20 weder auf der einen noch auf der anderen Seite anliegen. Anschließend wird das Festlegungselement 18 von dem Bolzen 21 abgenommen und durch Vor- oder Rückwärtsfahren des Gerätes, je nach dem in welcher Weise die beiden Träger 14 bzw. an den beiden Trägern 14 angeordneten Scheiben 9 zueinander verschoben und in die richtige Position zueinander eingebracht werden müssen, voroder rückwärts gefahren. Aufgrund der auf die Träger 14 einwirkenden Verschiebungskräfte, die durch die schräge Anstellung der Scheiben 9 zur Fahrtrichtung 7 bei Vor- oder Rückwärtsfahrt des Gerätes auf diese einwirken, werden die Träger 14 verschoben. Wenn die richtige Position der beiden Träger 14 zueinander erreicht worden ist, wird das Festlegungselement 18 in dem entsprechenden Langloch 20 wieder auf dem Bolzen 21 eingehängt und mittels eines Sicherungselementes auf dem Bolzen 21 gesichert.

Das Festlegungselement 18 auf der in Fahrtrichtung 7 gesehen linken Seite des Scheibengerätes ist als Druckstange und das auf der in Fahrtrichtung 7 gesehen rechten Seite angeordnete Festlegungselement 18 ist als Zugstange ausgebildet.

Das in den Fig. 1 bis 4 dargestellte Festlegungselement 18 ist selbst nicht zur Verschiebung der Träger 14 geeignet, sondern ausschließlich zur Festlegung der Träger 14 gegenüber dem Rahmen 4 bzw. zueinander sowie zur Bestimmung der die vorgesehene Arbeitsposition. Die Verschiebung der Träger 14 und der Scheiben 9 zueinander erfolgt durch die quer zur Fahrtrichtung 7 wirksam werdende Kraftkomponente an den Scheiben 9 beim Vor- und Rückwärtsfahren des Gerätes. Es wird also die Vor- und Rückwärtsbewegung des Gerätes durch den Ackerschlepper dazu genutzt, die Scheiben 9 entsprechend zueinander einzustellen. Dieses ist dadurch möglich, dass die Scheiben 9 der vorderen und hinteren Querreihe entgegengesetzt schräg zur Fahrtrichtung 7 zueinander angestellt sind.

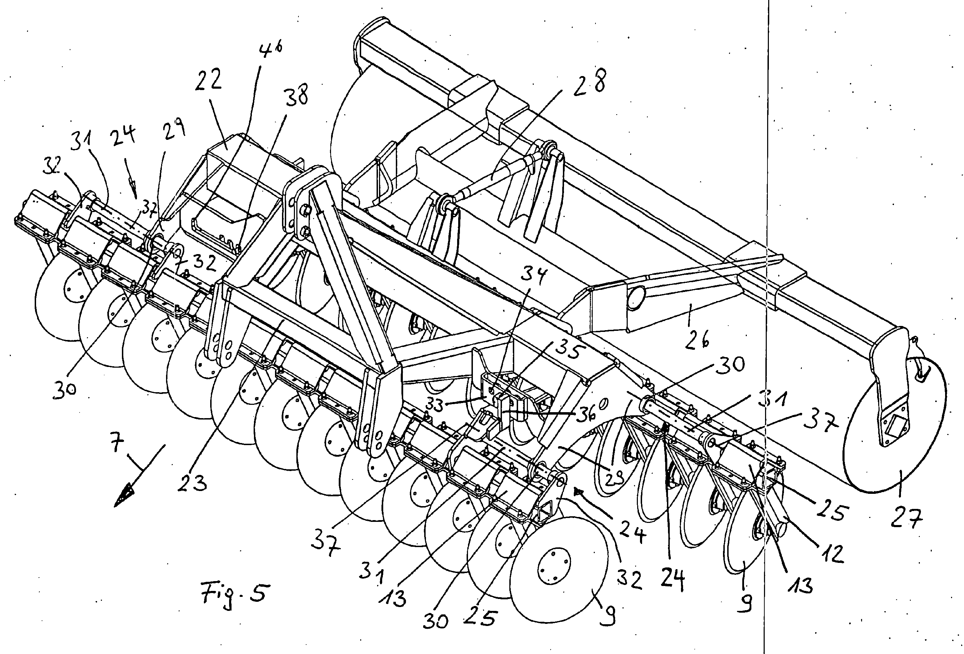

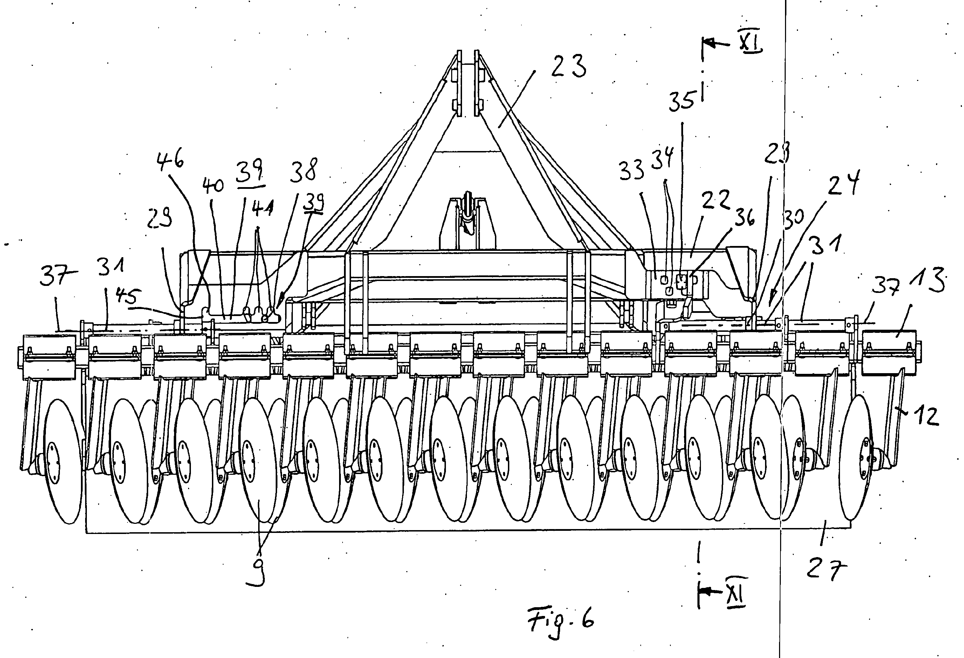

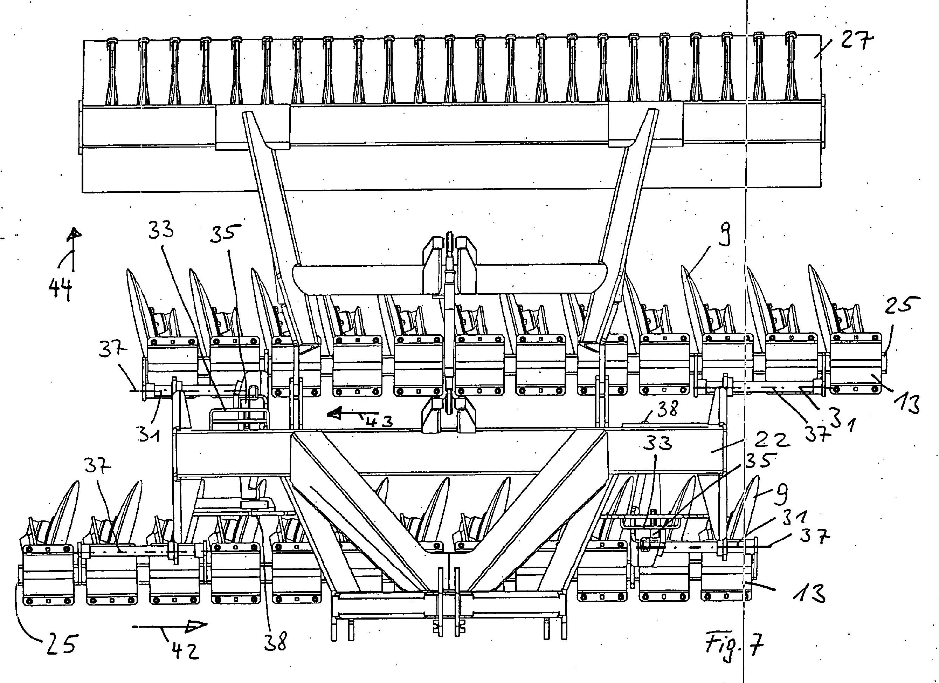

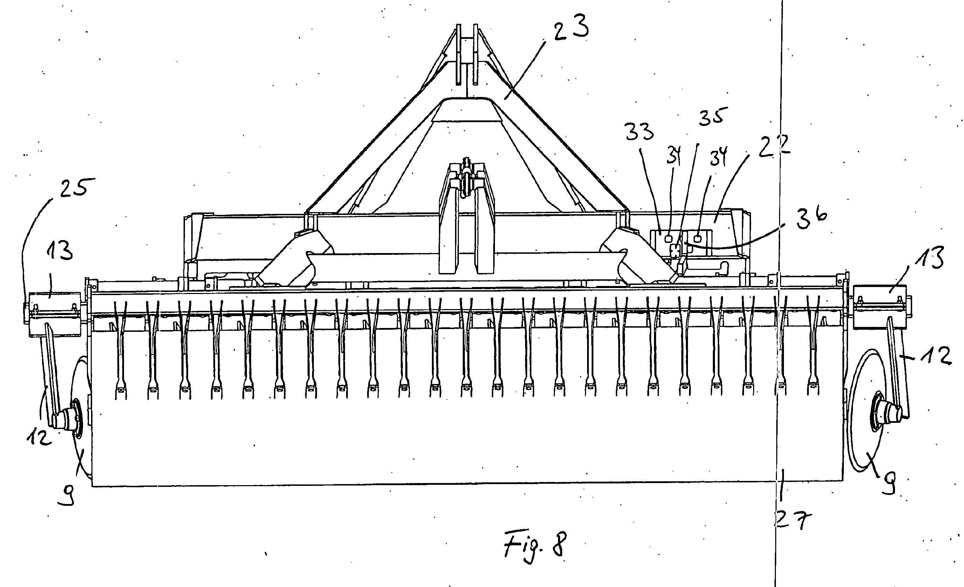

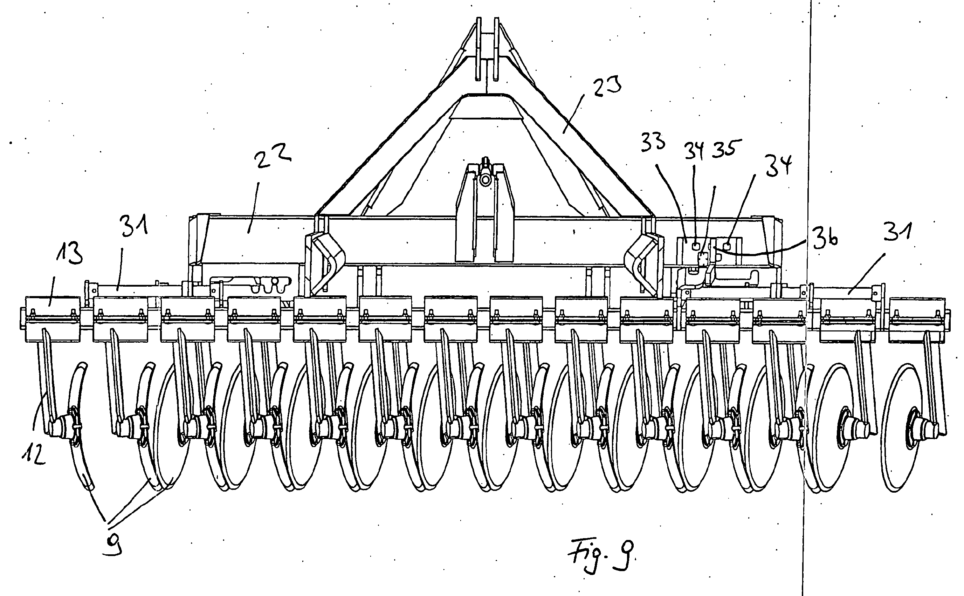

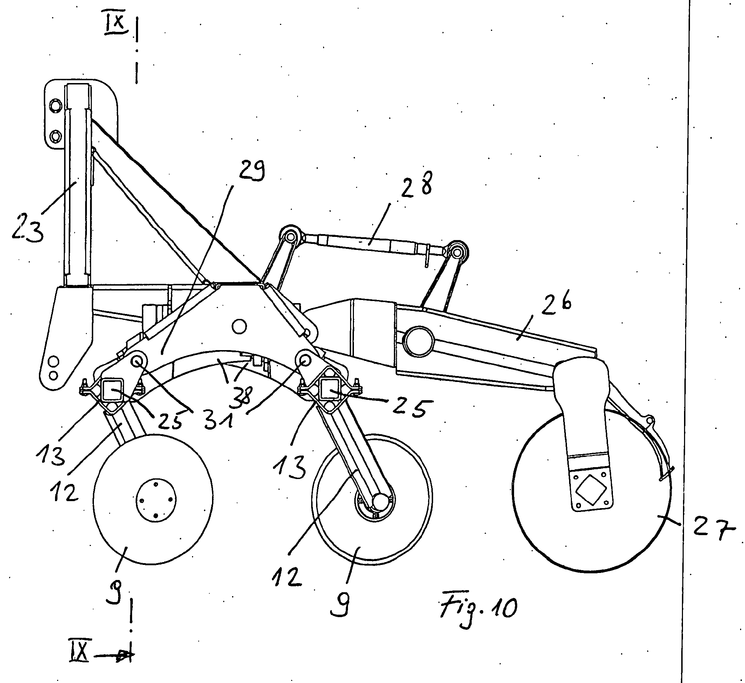

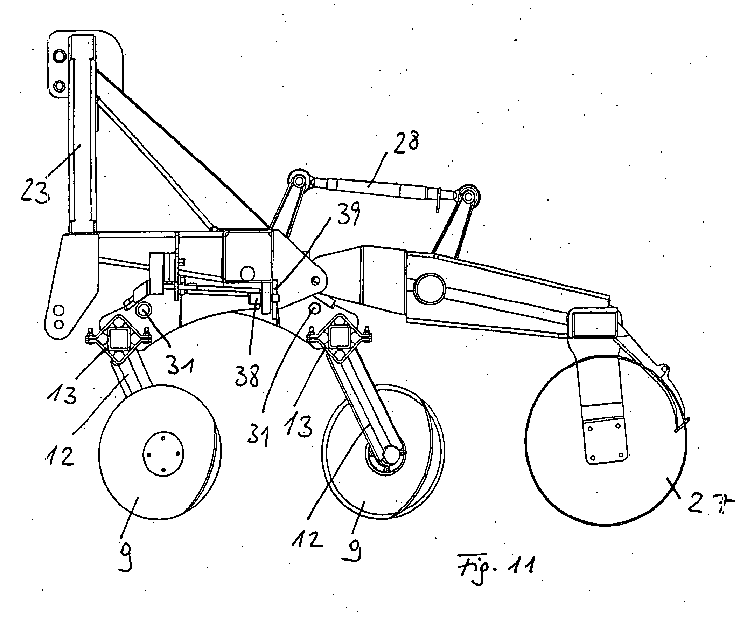

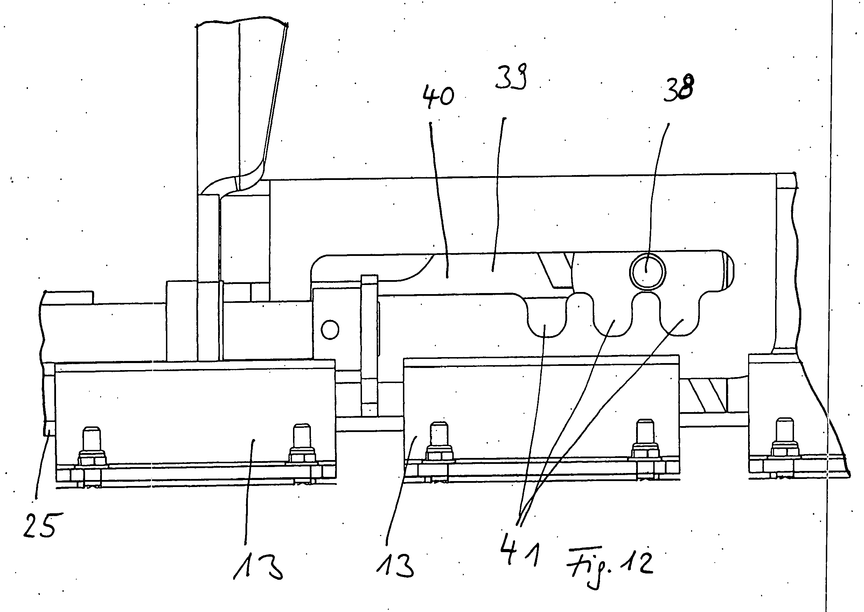

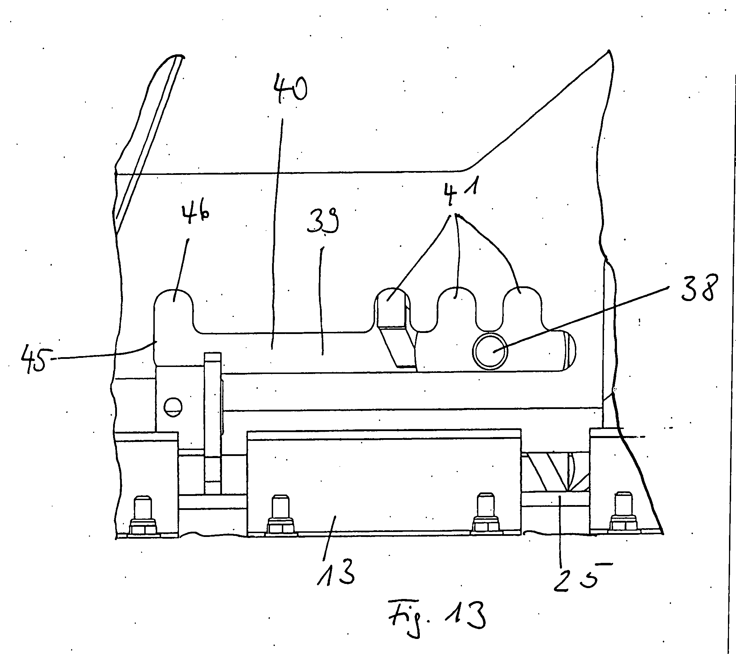

Das Scheibengerät gemäß den Fig. 5 bis 13 ist als nicht klappbares Gerät ausgebildet. Die nachfolgende Beschreibung gilt selbstverständlich auch für ein Gerät, wobei die beschriebenen Einheiten an einschwenkbaren Seitenrahmen entsprechend der Ausführung gemäß Fig. 1 bis 2 angeordnet sind.

Das Scheibengerät gemäß den Fig. 5 bis 13 weist den Rahmen 22 mit den daran angeordneten Dreipunktanbaubock 23 auf. An dem Rahmen 22 sind über Schiebeführungen 24 zwei parallel zueinander verlaufende Tragbalken 25 ausgebildete Träger angeordnet. An diesen Trägern 25 sind mittels Gelenkanordnungen 13 Tragarme 12 elastisch aufgehängt. An diesen Armen 12 sind schräg zur Fahrtrichtung 7 und zur Horizontalen angeordnete Scheiben 9, die für die Bodenkultivierung geeignet sind, frei drehbar angeordnet. Die Scheiben 9 an dem ersten Tragbalken 25 sind in entgegengesetzt schräg zu dem an dem zweiten Tragbalken 25 angeordneten Scheiben angeordnet.

Hinter den Scheiben ist an dem Rahmen 22 mittels Halterungen 26 eine die Eindringtiefe der Scheiben 9 in den Boden bestimmende Nachlaufwalze 27 angeordnet. Die Walze 27 kann zu dem Rahmen 22 und den Scheiben 9 durch die Einstellspindel 28 eingestellt werden.

An den Enden des Rahmens 22 sind nach vorn- und hinten ragende Lagerarme 29 angeordnet. An ihren Enden weisen diese Lagerarme 29 Buchsen 30 für eine Schiebeführung 24 auf. An den Trägern 25 sind die quer zur Fahrtrichtung 7 sich erstreckenden Wellen 31 mittels Halterung 32 im Abstand zu dem jeweiligen Träger 25 angeordnet. Diese Wellen 31 sind Teil der Schiebeführung 24 und in den Schiebebuchsen 30 angeordnet. Durch diese Anordnung können die Träger 25 quer zur Fahrtrichtung 7 gegenüber dem Rahmen 22 und zueinander verschoben werden. An dem Rahmen 22 ist für jeden Träger 25 eine Lochleiste 33 angeordnet. In die Löcher 34 dieser Lochleiste 33 ist ein Absteckbolzen 35 angeordnet. An dem Träger 25 sind jeweils mit der Lochleiste 33 und dem Absteckbolzen 35 zusammenwirkende Anschlagelemente 36 angeordnet. Die Anschlagelemente 36 mit dem in den Löchern 34 der Lochleiste 33 angeordneten Bolzen 35 bilden für den verschiebbaren Träger 25 ein Festlegungselement, welches die Arbeitsposition des Trägers 25 bzw. der daran angeordneten Scheiben 9 bestimmt. Des weiteren sind die Träger 25 mit den daran angeordneten Scheiben um die durch die Schiebeführung 24 verlaufende und quer zur Fahrtrichtung 7 ausgerichtete Schwenkachse 37 um einen begrenzten Schwenkwinkel frei schwenkbar am Rahmen 22 gelagert. An jedem Träger 25 ist ein Hebel 38 angeordnet, der in eine an dem Rahmen 22 angeordnete Verschiebekulisse 39 fasst. Diese Verschiebekulisse 39 ist als sägezahnartig ausgestaltetes Element 39 ausgebildet, in welches das Hebelelement 38 fasst. Dieses sägezahnartige Element weist ein Langloch 40 mit nebeneinander angeordneten Erweiterungen 41 des Langloches 40 auf, so dass sich die sägezahnartig ausgebildete Verschiebekulisse 39 ergibt.

Wenn das Bodenbearbeitungsgerät ausgehoben wird verschwenken die Träger 25 mit den Scheiben 9 um die Schwenkachse 37 der Schiebeführung 24, so dass das Hebelelement 38 auf der Seite, auf welcher sich die Erweiterungen 42, die das sägezahnartige Element 39 bilden, zur Anlage kommt, während wenn das Bodenbearbeitungsgerät auf dem Boden abgesenkt ist und die Scheiben 9 auf dem Boden aufstehen, das Hebelelement 38 auf der den Erweiterungen 41 abgewandten Seite des Langloches 40 des sägezahnartigen Elementes 40 zur Anlage kommt.

Die die Arbeitsstellung bestimmenden Anschläge, die von dem in den Löchern 34 der Lochleisten 33 angeordneten Absteckbolzen 35 und den mit den Absteckbolzen 35 zusammenwirkende Anschlagelement 36 sind so angeordnet, dass die die Arbeitsstellung bestimmenden Anschläge zur Begrenzung der seitlichen Verschiebbarkeit der Träger 25 so angeordnet sind, dass der Träger bei Vorwärtsfahrt des Gerätes an den Anschlägen anliegen und bei Rückwärtsfahrt des Gerätes sich der Träger 25 von den Anschlägen abheben.

Die Einstellung der Träger 25 gegenüber dem Rahmen 22 bzw. der Scheiben 9 zueinander geschieht folgendermaßen:
Um eine möglichst geringe Transportbreite des Gerätes zu erreichen, muss der vordere Träger 25 in Pfeilrichtung 42 und der hintere Träger 25 in Pfeilrichtung 43 verschoben werden. Hierzu wird das Scheibengerät auf den Boden abgesenkt, so dass die Scheiben 9 auf dem Boden aufstehen bzw. in den Boden eingreifen. Die Verschiebung erfolgt dadurch, dass mittels des das Scheibengerät ziehenden Schleppers in Pfeilrichtung 44 rückwärts gefahren wird. Die aufgrund der schrägen Anordnung der Scheiben 9 sich ergebende quer zur Fahrtrichtung 7 wirkende Kraftkomponente wird der vorderen Träger 25 in Pfeilrichtung 43 und der hintere Träger 25 in Pfeilrichtung 42 verschoben, und zwar soweit, bis das Hebelelement 39 am Ende 45 des Langloches 40 der Schiebekulisse 39 und somit sich im Bereich der sich dort befindenen Erweiterung 46 des Langloches 40 befindet. Durch die Rückwärtsfahrt hebt sich das Anschlagelement 36 von dem Bolzen 35 ab.

Wenn das Bodenbearbeitungsgerät anschließend ausgehoben wird, schwenkt der Hebel in die Erweiterung 46 des Langloches 40. Wie so ersichtlich ist, wird dadurch der jeweilige Träger 25 gegenüber dem Rahmen 22 verriegelt. Um sicherzustellen, dass auch auf unebenen Transportstrecken der Hebel 38 nicht aus der Erweiterung 46 herausspringt, und sich entgegengesetzt der Pfeilrichtung 43 bzw. 44 jeweils wieder verschiebt, ist dem Hebel 38 und der Verschiebekulisse 39 ein nicht dargestelltes Verriegelungselement zugeordnet, welches das Hebelelement 38 sicher am Ende 45 des Langloches 40 hält und somit verhindert, dass das Hebelelement 38 sich in der Kulisse 39 verschieben kann. Hierdurch wird eine sichere Verriegelung der Träger 25 in der Transportstellung erreicht.

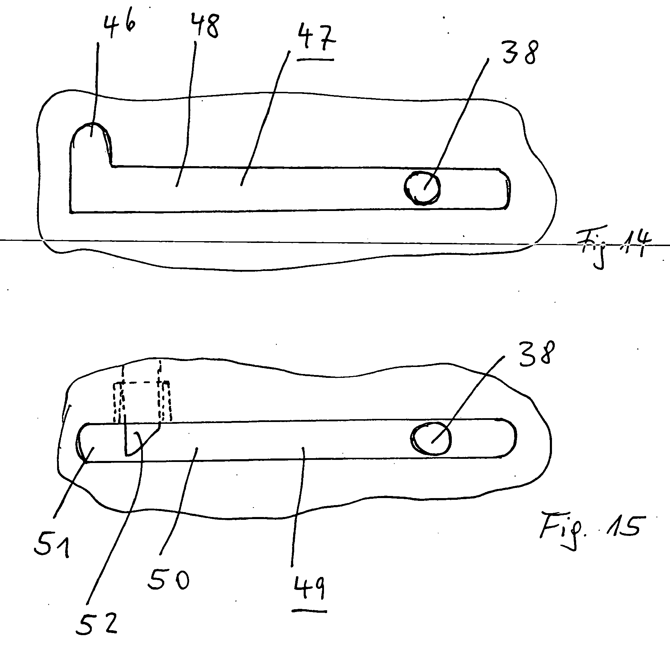

In einer vereinfachen Ausführung der Schiebekulisse 47 wie in Fig. 14 gezeigt, in welches das Hebelelement 38 eingreift, ist diese nur als Langloch 48 mit einer einseitigen Erweiterung 46 , die die Verriegelungsposition für die Träger 25 in der Transportposition bildet, ausgestattet.

Auch kann in einer anderen, wie in Fig. 15 dargestellten Ausführung die Verschiebekulisse 49 nur als Langloch 50 ausgebildet sein, wobei dann dem einen Ende 51, welche die Transportposition bestimmt, ein Verriegelungselement 52 zugeordnet ist, welches das Hebelelement 38 an dem Ende 51 des Langloches 50 hält. Dieses Verriegelungselement 52 kann beispielsweise als Absteckbolzen, als mittels einer Fernbedienung verriegelbarer Bolzen oder Klinke etc. ausgebildet sein.

Wenn die Nachlaufwalze beispielsweise als Keilringwalze ausgebildet ist, kann die Verschiebbarkeit und Einstellbarkeit der Träger zueinander und zum Rahmen und somit auch zu der Nachlaufwalze dazu genutzt werden, dass die Scheiben der hinteren Scheibenreihe zu den Keilringen der Keilringwalze einstellbar sind, um mittels des Festlegungselementes die Verschiebung des Tragbalkens 25, an dem die Scheiben 9 der hinteren Querreihe angeordnet sind, in der gewünschten Position zu den Keilringen der Nachlaufwalze festsetzbar sein. Die Einstellung kann auch so erfolgen, dass mittels der nachlaufenden Keilringwalze eine entsprechende Einstellung zu den Scheiben 9 der hinteren Scheibenreihe die von den Scheiben 9 der hinteren Scheibenreihe hinterlassenen Welle eingeebnet werden.

Hierbei kann die Einstellung so erfolgen, dass die Keilringe von den zu den Scheiben 9 der hinteren Scheibereihe hinterlassenen Welle so einstellbar sind, dass der mittlere Bereich der Keilringwalze sich oberhalb des mittleren Bereiches der Dämme befindet.

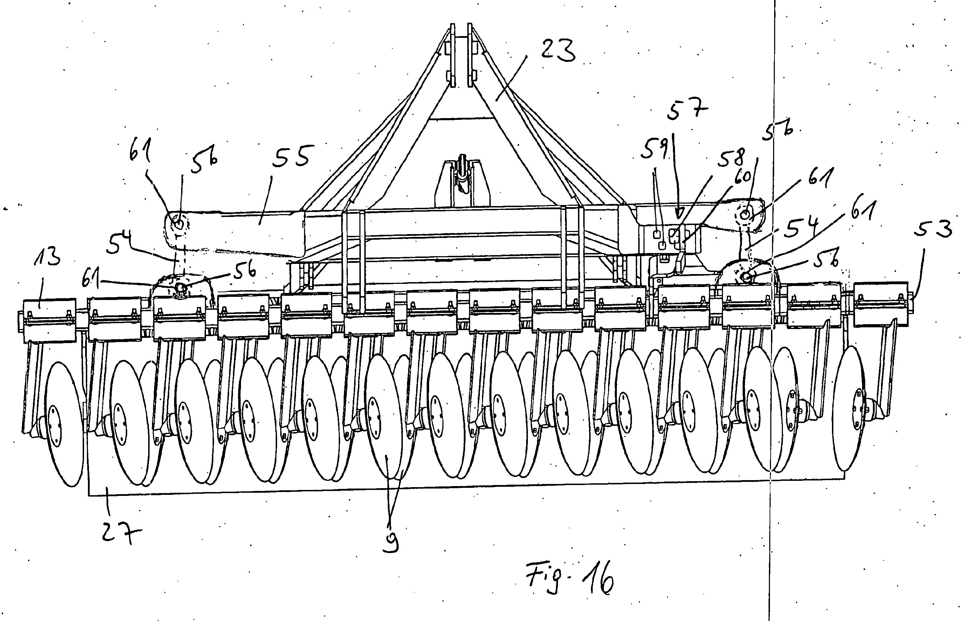

Gemäß der Fig. 16 sind bei dem Scheibengerät die Tragbalken 53 über schwenkbar angeordneten Halterungselementen 54 am Rahmen 55 angeordnet sein, deren Schwenkachsen 56 nicht vertikal, sondern horizontal und in Fahrtrichtung 7 verlaufen. Zur Festlegung der jeweiligen Arbeitsposition der Tragbalken 53 bzw. der daran angeordneten Scheiben 9 zueinander sind zwischen dem Rahmen 55 und den Tragebalken 53 bzw. den schwenkbar angeordneten Halterungen 54 die Festlegungselemente 57 vorgesehen, die als mit einem Absteckbolzen 58 zusammenwirkende Lochreihe 59 ausgebildet sein können. An dem Absteckbolzen 58 kommt das am Tragbalken 54 oder der Halterung 55 angeordneten Anschlagelementes 60 zur Anlage. Bei einer derartigen Ausbildung der schwenkbaren Halterung 54, deren Schwenkachsen 56 in Fahrtrichtung 7 verlaufen wirkt, sich vorteilhaft aus, wenn die Gelenke 61 und die Halterung 54 oberhalb der Schwerpunktlinie, die quer zur Fahrtrichtung 7 und in Längsrichtung der Tragbalken 54 mit den daran angeordneten Scheiben 9 verläuft, sich befinden.

## Patentansprüche

1. Scheibengerät, das zur Bodenkultivierung geeignet ist, wobei das Scheibengerät zwei hintereinander und zumindest annähernd parallel zueinander angeordnete und quer zur Bewegungsrichtung des Scheibengerätes laufende und zueinander verschiebbare Träger (14, 25) aufweist, wobei jeder Träger (14, 25) mit einer Vielzahl von Armen versehen ist, die mit wenigstens einer schräg angestellten und frei drehbaren Scheibe versehen sind, wobei jeder Arm elastisch an dem zugeordneten Träger (14, 25) aufgehängt ist, wobei entsprechende Scheiben an dem ersten und zweiten Träger (14, 25) so angeordnet sind, dass die Scheiben an dem ersten Träger (14, 25) entgegengesetzt schräg zu den an dem zweiten Träger (14, 25) angeordneten Scheiben angeordnet sind, wobei wenigstens ein Element (18) für den ersten und/oder zweiten Träger (14, 25) vorgesehen ist , dass zur Festlegung der im wesentlichen parallelen Träger (14, 25) in wenigstens eine vorher bestimmte Arbeitsposition zueinander und/oder zum Rahmen des Scheibengerätes ausgebildet ist, **dadurch gekennzeichnet, dass** den Trägern (14,25) zur Festlegung der Träger (14,25) zumindest eine mit zumindest einem Absteckbolzen (21,35) zusammenwirkende Lochreihe (20,33,34) zugeordnet ist, und dass das Festlegungselement (18) mehrere quer nebeneinander angeordnete und einen unterschiedlichen radialen Abstand zu der anderen Seite des Festlegungselementes (18) aufweisende Durchbrüche (20), vorzugsweise Langlöcher (20) aufweist, die mit einem am Rahmen (4) oder Träger (14) angeordneten Bolzen (21,22) in Wirkverbindung bringbar sind.

2. Scheibengerät nach Anspruch 1, **dadurch gekennzeichnet, dass** Festlegungselement (18,35,36,58,60) nicht zur Verschiebung der Träger (14 ,25,53) geeignet ist.

3. Scheibengerät nach einem oder mehreren der vorstehenden Ansprüche, **dadurch gekennzeichnet, dass** zumindest einer der Träger (25) in einer Schiebeführung (24) am Rahmen (22) angeordnet ist.

4. Scheibengerät nach einem oder mehreren der vorstehenden Ansprüche, **dadurch gekennzeichnet, dass** beide Träger (25) in einer Schiebeführung (24) angeordnet sind.

5. Scheibengerät nach einem oder mehreren der vorstehenden Ansprüche, **dadurch gekennzeichnet, dass** jedem Träger (14,25,53) ein Festlegungselement (18,35,36,60) zugeordnet ist.

6. Scheibengerät nach einem oder mehreren der vorstehenden Ansprüche, **dadurch gekennzeichnet, dass** die beiden Träger (14) an um aufrechte Achsen schwenkbaren Halterungen (17) angeordnet sind und dass zumindest einer der Halterungen (17) das Festlegungselement (18) zugeordnet ist.

7. Scheibengerät nach einem oder mehreren der vorstehenden Ansprüche, **dadurch gekennzeichnet, dass** zumindest einer der Träger (14) an um aufrechte Achsen schwenkbaren Halterungen (17) angeordnet ist, und dass der Halterung (17) das Festlegungselement (18) zugeordnet ist.

8. Scheibengerät nach einem oder mehreren der vorstehenden Ansprüche, **dadurch gekennzeichnet, dass** zumindest einer der beiden Träger (53) um in Fahrtrichtung (7) weisende Achsen (56) schwenkbaren Halterungen (54) angeordnet sind, und dass der verschiebbar angeordnete Träger (53) mittels des Festlegungselementes (58,60) in seiner Position festsetzbar ist.

9. Scheibengerät nach einem oder mehreren der vorstehenden Ansprüche, **dadurch gekennzeichnet, dass** das Festlegungselement (18,35,36,58,60) zwischen den verschiebbaren Trägern (14,25,53) und dem Rahmen (4,22,55) angeordnet ist.

10. Scheibengerät nach einem oder mehreren der vorstehenden Ansprüche, **dadurch gekennzeichnet, dass** der hintere Träger unverschiebbar am Tragrahmen angeordnet ist und dass der vordere Träger (25) quer zur Fahrtrichtung (7) verschiebbar mittels entsprechender Haltevorrichtungen am Rahmen (22) befestigt ist.

11. Scheibengerät nach einem oder mehreren der vorstehenden Ansprüche, **dadurch gekennzeichnet, dass** der hintere Querträger (25) mittels entsprechender Halterung verschiebbar am Tragrahmen (22) und der vordere Halter unverschiebbar am Tragrahmen befestigt ist.

12. Scheibengerät nach einem oder mehreren der vorstehenden Ansprüche, **dadurch gekennzeichnet, dass** die die Arbeitsstellung bestimmenden Anschläge (35,36,58,60) zur Begrenzung der seitlichen Verschiebbarkeit der Träger (25,53) so angeordnet sind, dass der Träger (25,53) bei Vorwärts fahrt des Gerätes an den Anschlägen anliegen und bei Rückwärtsfahrt des Gerätes sich der Träger (25,53) von den Anschlägen (35,36,58,60)abheben.

13. Scheibengerät nach einem oder mehreren der vorstehenden Ansprüche, **dadurch gekennzeichnet, dass** das Verriegelungselement mittels einer Fernbedienungseinrichtung zu ver- und entriegeln ist.

## Claims

1. Discer suitable for soil cultivation, wherein the discer has two mutually displaceable carriers (14, 25), which are arranged one behind the other and at least approximately in parallel and run transversely to the motional direction of the discer, wherein each carrier (14, 25) is provided with a multiplicity of arms provided with at least one obliquely angled and freely rotatable disc, wherein each arm is suspended elastically from the associated carrier (14, 25), wherein appropriate discs are disposed on the first and second carrier (14, 25) such that the discs on the first carrier (14, 25) are inclined oppositely to the discs disposed on the second carrier (14, 25), wherein at least one element (18) is provided for the first and/or second carrier (14, 25), which element is configured to secure the substantially parallel carriers (14, 25) in at least one predetermined working position relative to each other and/or to the frame of the discer, **characterized in that**, for the securement of the carriers (14, 25), at least one line of holes (20, 33, 34) cooperating with at least one linch pin (21, 35) is assigned to the carriers (14, 25), and **in that** the securing element (18) has a plurality of apertures (20), preferably long holes (20), which are arranged transversely next to one another and have a different radial distance to the other side of the securing element (18) and which can be brought into operative connection with a pin (21, 22) disposed on the frame (4) or carrier (14).

2. Discer according to Claim 1, **characterized in that** the securing element (18, 35, 36, 58, 60) is not suitable for the displacement of the carriers (14, 25, 53).

3. Discer according to one or more of the preceding claims, **characterized in that** at least one of the carriers (25) is disposed in a sliding guide (24) on the frame (22).

4. Discer according to one or more of the preceding claims, **characterized in that** both carriers (25) are disposed in a sliding guide (24).

5. Discer according to one or more of the preceding claims, **characterized in that** a securing element (18, 35, 36, 60) is assigned to each carrier (14, 25, 53).

6. Discer according to one or more of the preceding claims, **characterized in that** the two carriers (14) are disposed on mountings (17) pivotable about vertical axes, and **in that** the securing element (18) is assigned to at least one of the mountings (17).

7. Discer according to one or more of the preceding claims, **characterized in that** at least one of the carriers (14) is disposed on mountings (17) pivotable about vertical axes, and **in that** the securing element (18) is assigned to the mounting (17).

8. Discer according to one or more of the preceding claims, **characterized in that** at least one of the two carriers (53) is disposed on mountings (54) pivotable about axes (56) pointing in the direction of travel (7), and **in that** the displaceably arranged carrier (53) can be fixed in its position by means of the securing element (58, 60).

9. Discer according to one or more of the preceding claims, **characterized in that** the securing element (18, 35, 36, 58, 60) is disposed between the displaceable carriers (14, 25, 53) and the frame (4, 22, 55).

10. Discer according to one or more of the preceding claims, **characterized in that** the rear carrier is arranged in a non-displaceable manner on the carrier frame, and **in that** the front carrier (25) is fastened to the frame (22) by means of appropriate holding devices such that it is displaceable transversely to the direction of travel (7).

11. Discer according to one or more of the preceding claims, **characterized in that** the rear transverse carrier (25) is fastened to the carrying frame (22) by means of an appropriate mounting and the front holder is fastened in a non-displaceable manner to the carrying frame.

12. Discer according to one or more of the preceding claims, **characterized in that** the stops (35, 36, 58, 60) which determine the working position, in order to delimit the lateral displaceability of the carriers (25, 53), are arranged such that the carriers (25, 53) bear against the stops when the discer travels forwards and the carriers (25, 53) lift off from the stops (35, 36, 58, 60) when the discer travels backwards.

13. Discer according to one or more of the preceding claims, **characterized in that** the locking element can be locked and unlocked by means of a remote control device.

## Revendications

1. Machine à disques pour cultiver le sol :
* la machine à disques ayant deux poutres (14, 25) l'une derrière l'autre et au moins sensiblement parallèles, en pouvant coulisser transversalement à la direction de déplacement de l'appareil à disques l'une par rapport à l'autre,
* chaque poutre (14, 25) étant munie de plusieurs bras équipés d'au moins un disque disposé en biais et tournant librement,
* chaque bras étant suspendu élastiquement à la poutre associée (14, 25),
* des disques correspondant étant installés sur la première et la seconde poutre (14, 25) de façon que les disques de la première poutre (14, 25) soit inclinées à l'opposé des disques de la seconde poutre (14, 25),
* au moins un élément (18) étant prévu pour la première et/ou la second poutre (14, 25) pour fixer les poutres (14, 25) essentiellement parallèles, dans au moins une position de travail prédéfinie, l'une par rapport à l'autre et/ou par rapport au châssis de l'appareil à disques,
appareil **caractérisé en ce que**
les poutres (14, 25) comportent au moins une rangée de trous (20, 33, 34) coopérant avec au moins un goujon de blocage (21, 35) pour fixer les poutres (14, 25), et
l'élément de blocage (18) comporte plusieurs passages (20) de préférence des trous oblong (20) juxtaposés transversalement et à une distance radiale différente par rapport à l'autre coté de l'élément de fixation (18), les trous étant destinés à coopérer avec un goujon (21, 22) prévu sur le châssis (4) ou la poutre (14).

2. Appareil à disques selon la revendication 1,
**caractérisé en ce que**
l'élément de blocage (18, 35, 36, 58, 60) ne convient pas pour coulisser les poutres (14, 25, 53).

3. Appareil à disques selon l'une ou plusieurs des revendications précédentes,
**caractérisé en ce qu'**
au moins l'une des poutres (25) est installée dans un guidage de coulissement (24) du châssis (22).

4. Appareil à disques selon l'une ou plusieurs revendications précédentes,
**caractérisé en ce que**
les deux poutres (25) sont installées dans un guidage de coulissement (24).

5. Appareil à disques selon l'une ou plusieurs des revendications précédentes,
**caractérisé en ce que**
un élément de blocage (18, 35, 36, 60) est associé à chaque poutre (14, 25, 53).

6. Appareil à disques selon l'une ou plusieurs des revendications précédents,
**caractérisé en ce que**
les deux poutres (14) prévues sur des supports (17) ont des supports pivotants autour d'axes verticaux et l'élément de blocage (18) est associé à au moins l'une des fixations (17).

7. Appareil à disques selon l'une ou plusieurs des revendications précédentes,
**caractérisé en ce qu'**
au moins l'une des poutres (14) est installée sur des supports (17) pivotant autour d'axes horizontaux et l'élément de blocage (18) est associé à la fixation (17).

8. Appareil à disques selon l'une ou plusieurs des revendications précédentes,
**caractérisé en ce qu'**
au moins l'une des deux poutres (53) comporte des moyens de fixation (54) pivotant autour d'axes (56) dirigés dans la direction de déplacement (7), et
la poutre pivotante (53) est maintenue en position par l'élément de fixation (58, 60).

9. Appareil à disques selon l'une ou plusieurs des revendications précédentes
**caractérisé en ce que**
l'élément de blocage (18, 35, 36, 58, 60) est installé entre les poutres coulissantes (14, 25, 53) et le châssis (4, 22, 55).

10. Appareil à disques selon l'une ou plusieurs des revendications précédentes
**caractérisé en ce que**
la poutre arrière est installée de manière non coulissante sur le châssis, et
la poutre avant (25) coulisse transversalement à la direction de déplacement (7) en étant fixée au châssis (22) par des dispositifs de fixation correspondants.

11. Appareil à disques selon l'une ou plusieurs des revendications précédentes,
**caractérisé en ce que**
la traverse arrière (25) est fixée de manière coulissante par un moyen de fixation approprié au châssis (22) et le châssis avant est fixé de manière imperdable au châssis.

12. Appareil à disques selon l'une ou plusieurs des revendications précédentes,
**caractérisé en ce que**
les butées (35, 36, 58, 60) qui définissent la position active pour limiter la possibilité de coulissement latéral des poutres (25, 53), sont installées pour que les supports (25, 53), lors de la marche avant de l'appareil viennent en appui sur les butées et en marche arrière de l'appareil, les poutres (25, 53) se soulèvent des butées (35, 36, 58, 60).

13. Appareil à disques selon l'une ou plusieurs des revendications précédentes,
**caractérisé en ce que**
l'élément de verrouillage se verrouille ou se déverrouille par l'installation de télécommande.
